# EUROPÄISCHE PATENTSCHRIFT

(11) **EP 0 873 501 B1**
(45) Veröffentlichungstag und Bekanntmachung des Hinweises auf die Patenterteilung: **10.04.2002**
(21) Anmeldenummer: 96943987.6
(22) Anmeldetag: 17.12.1996
(51) Int. Cl.: G01K 1/18

(54) **SONDE ZUR TEMPERATURMESSUNG**
TEMPERATURE MEASURING PROBE
SONDE POUR MESURER LA TEMPERATURE

(30) Priorität: 11.01.1996 DE 19600822
(43) Veröffentlichungstag der Anmeldung: 28.10.1998
(73) Patentinhaber: BASF AKTIENGESELLSCHAFT, 67056 Ludwigshafen (DE)
(72) Erfinder: HAMMER, Klaus, D-67112 Mutterstadt (DE); WEBER, Wilhelm, D-67435 Neustadt (DE)
(74) Vertreter: Isenbruck, Günter, Dr.
(86) Internationale Anmeldenummer: EP9605672
(87) Internationale Veröffentlichungsnummer: WO9725601

(56) Entgegenhaltungen:
- US-A- 3 016 412
- US-A- 4 467 134
- US-A- 4 749 415

## Beschreibung

Die Erfindung betrifft eine Sonde zur Temperaturmessung mit einem Sondenkörper, der eine Bohrung aufweist, in die ein Thermoelement einsetzbar ist, dessen thermisch empfindliche Spitze aus dem vorderen Teil des Sondenkörpers herausragt.

Derartige Sondenkörper sind bekannt. Sie sind in der Regel zylindrisch ausgebildet und verlaufen am vorderen Ende konisch. Am hinteren Ende sind sie mit einem Gewinde versehen, mit dem sie in eine Halterung einschraubbar sind. In die zylindrische Bohrung ist ein Thermoelement bekannter Bauart, vorzugsweise ein Miniatur-Mantel-Thermoelement, eingesetzt. Derartige Thermoelemente bestehen normalerweise aus zwei Adern unterschiedlicher Metalle, die in ein Isolationsmaterial eingebettet und von einer metallischen Abschirmung, dem Mantel, umgeben sind. Als Isolationsmaterial dient dabei Magnesiumoxid oder Aluminiumoxid, die einen hohen Isolationswiderstand besitzen. Als Mantelmaterialien werden in der Regel rostfreie Stähle verwendet. Als Adern des Thermoelements werden üblicherweise NiCr-Ni-Drähte verwendet, die am vorderen Ende miteinander verschweißt sind. Bei Temperaturen über 1200 °C kommen auch Platin-Rhodium-Platin-Thermopaare zum Einsatz.

Thermosonden mit derartigen Thermoelementen werden für viele Zwecke eingesetzt. Probleme entstehen, wenn sie zur Temperaturmessung in Reaktoren und Reaktorrohren eingesetzt werden, die unter hohem Druck stehen und bei denen eine schnelle Temperaturerfassung notwendig ist. Der hohe Druck führt dazu, daß der Sondenkörper, der stabil ausgeführt sein muß, eine große Wandstärke aufweist. Dies führt zu einer relativ trägen Temperaturänderung, welche sich auf die Spitze des Thermoelements überträgt. Anlagen, in denen solche Thermosonden zum Einsatz kommen, sind beispielsweise Hochdruck-Polyethylenanlagen, bei denen die Reaktion durch Ethylenverdichtung bei Betriebsdrücken zwischen 15·10⁷ und 35·10⁷ Pa betrieben wird. In einem solchen Reaktor sind ca. 40 Thermosonden im Einsatz, die das entsprechende Temperaturprofil abbilden sollen. Die Sondenkörper haben dabei in der Regel einen Durchmesser von 8 bis 10 mm. Der Durchmesser der in diese eingesetzten Thermoelemente liegt üblicherweise bei etwa 2 mm.

Aus der US-A-4,749,415 ist ein Thermoelement mit hohem Reaktionsvermögen bekannt, welches in der zylindrischen Außenwand Ringnuten aufweißt, zwischen denen Kühlrippen stehenbleiben. Der Nutgrund der Ringnut und die Öffnung der Ringnut liegen parallel zur Längsachse der Sonde, so daß sich die Ringnut in radialer Richtung erstreckt. Hierdurch wird die umströmte Oberfläche vergrößert, wodurch aufgrund der verbesserten Wärmeübertragung eine schnellere Angleichung der Temperatur der Sonde mit der zu messenden Temperatur erreicht wird.

Der Erfindung liegt die Aufgabe zugrunde, Thermosonden zu schaffen, die in Reaktoren mit sehr hohem Druck und sehr hoher Temperatur sowie hoher Strömungsgeschwindigkeit der Reaktanden einsetzbar sind und die trotzdem schnelle Temperaturänderungen erfassen können.

Erfindungsgemäß wird dies dadurch erreicht, daß der vordere Teil des Sondenkörpers mit einem Ringspalt versehen ist, der sich in geringem Abstand von der Bohrung entlang der Längsachse der Sonde erstreckt.

Dieser Ringspalt weist eine möglichst geringe Dicke, in der Regel 0,1 bis 0,5 mm, vorzugsweise 0,1 bis 0,2 mm, auf. Die Länge des Ringspalts beträgt 5 bis 20 mm, vorzugsweise 10 bis 15 mm. Der Ringspalt kann mittels eines Laserstrahls hergestellt sein.
Er kann auch dadurch hergestellt werden, daß der vordere Teil des Sondenkörpers mindestens eine stufenförmige Verringerung des Durchmessers aufweist, auf die eine Kappe aufgesetzt ist, deren Innendurchmesser im vorderen Teil größer ist als der vordere Teil des Sondenkörpers, wodurch der Ringspalt entsteht. Die Kappe kann mit dem Sondenkörper verschweißt werden.

Die erfindungsgemäße Sonde ist besonders geeignet für die schnelle Temperaturerfassung in Anlageteilen, in denen sehr hohe Drücke, Temperaturen und Strömungsgeschwindigkeiten auftreten. Dies ist der Fall in chemischen Reaktoren, Rührkesseln, Rohrreaktoren, Zuleitungen zu diesen Apparaten sowie Rohrleitungsverbindungen. Vorzugsweise können solche Sonden eingesetzt werden in Polymerisationsreaktoren sowohl in Gasphase als auch in überkritischem Medium, beispielsweise bei der Polyolefinherstellung. Auch bei der Suspensionspolymerisation in Schleifenreaktoren sind diese Sonden mit Vorteil einsetzbar.

Im allgemeinen treten dabei Druckbereiche auf von 30·10⁵ bis 50·10⁷ Pa, vorzugsweise 30·10⁵ bis 50·10⁷ Pa, insbesondere 10·10⁷ bis 35·10⁷ Pa, und Temperaturen zwischen 20 und 1000 °C, vorzugsweise 50 bis 500 °C, insbesondere 100 bis 400 °C. Die Strömungsgeschwindigkeiten liegen zwischen 1 und 50 m/s, vorzugsweise zwischen 5 und 15 m/s.

Als Thermoelemente können Miniatur-Mantel-Thermoelemente verschiedener Bauart, vorzugsweise solche aus NiCr-Ni-Drähten verwendet werden, die am vorderen Ende miteinander verschweißt sind. Auch Platin-Rhodium-Platin-Thermopaare sowie andere bekannte Thermoelemente können hier zum Einsatz kommen. Diese Drähte des Thermoelements sind in ein elektrisch nichtleitendes Isolationsmaterial wie Magnesiumoxid oder Aluminiumoxid eingebettet und von einer metallischen Abschirmung, dem Mantel, umgeben. Am vorderen Ende sind die Thermoelemente durch eine metallische Kappe mit dem Mantel verbunden. Diese Kappe muß unempfindlich gegen die auftretenden hohen Temperaturen, Drücke und Strömungsgeschwindigkeiten sein. Vorzugsweise ist die Kappe halbkugelförmig ausgebildet.

Anstatt der Thermoelemente können auch Widerstandsthermometer oder Meßwiderstände eingesetzt werden. Von besonderem Vorteil sind hierbei Platin-Widerstandsthermometer und Platin-Meßwiderstände, beispielsweise entsprechend der DIN IEC 751. Diese Widerstandsthermometer bestehen aus einem auf Temperaturen ansprechenden Meßwiderstand in einer Schutzhülle, inneren Zuleitungen und äußeren Anschlüssen zur Verbindung mit elektrischen Meßinstrumenten.

Weitere Einzelheiten und Vorteile der Erfindung können den in der Zeichnung dargestellten Ausführungsbeispielen entnommen werden. Es zeigen:
- Fig. 1: eine Sonde bekannter Bauart, eingebaut in ein Reaktorrohr, im Schnitt;
- Fig. 2: eine vergrößerte Darstellung des vorderen Teils der in Fig. 1 dargestellten Sonde im Schnitt;
- Fig. 3: eine erste Ausführungsform einer erfindungsgemäßen Sonde im Schnitt;
- Fig. 4: eine zweite Ausführungsform einer erfindungsgemäßen Sonde im Schnitt;
- Fig. 5: ein Diagramm der zeitlichen Abhängigkeit der Temperaturanzeige bei einer bekannten Sonde gemäß Fig. 2;
- Fig. 6: ein Diagramm der zeitlichen Abhängigkeit der Temperaturanzeige bei einer Sonde gemäß Fig. 4.

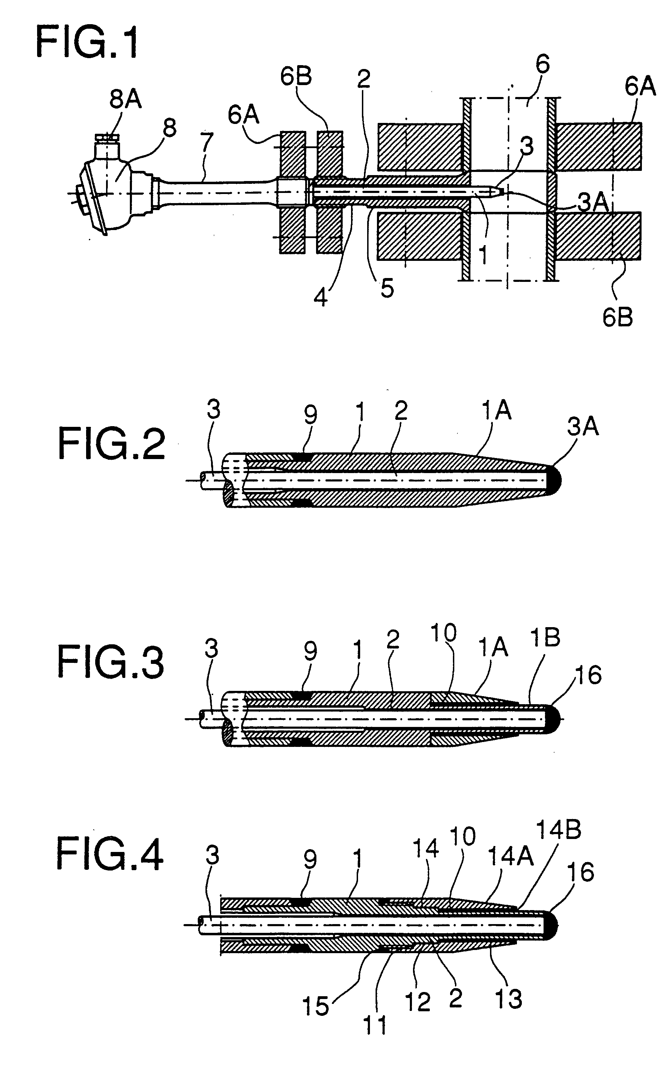

Bei der in Fig. 1 dargestellten Ausführungsform ist eine Sonde bekannter Bauart dargestellt, die in einen Rohrreaktor eingebaut ist. Dabei ist im Sondenkörper 1 eine zylindrische Bohrung 2 vorgesehen, in die ein ummanteltes Thermoelement 3 eingesetzt ist, welches eine thermoempfindliche Spitze 3A aufweist. Der Sondenkörper 1 ist in der zylindrischen Ausnehmung 4 eines Anschlußstücks 5 gelagert, das zwischen den Flanschen 6A und 6B eines Reaktorrohres 6 druckdicht gehaltert ist. Im Reaktorrohr 6 können bei Reaktionen beispielsweise bei der Herstellung von Polyethylen durch Ethylenverdichtung Betriebsdrücke zwischen 500 und 5000 bar, vorzugsweise zwischen 500 und 3500 bar, auftreten. Dabei kann es zu starken Temperaturanstiegen kommen, die zwischen 300 und 1000 °C liegen können. Das Anschlußstück 5 ist über Flansche 6A und 6B mit dem Verbindungsstück 7 eines Anschlußkopfes 8 verschraubt, aus dem über den Anschlußteil 8A elektrische Leitungen zu den Anzeigegeräten führen.

Der in das Anschlußstück 5 eingesetzte Sondenkörper 1 ragt mit seinem vorderen Ende 1A in das Reaktorrohr 6. Sein Aufbau ist dem in Fig. 2 dargestellten Ausführungsbeispiel zu entnehmen. An seinem vorderen Ende ist der zylindrische Sondenkörper 1, der einen Außendurchmesser von 9 mm hat, in Form eines Kegelstumpfs 1A ausgebildet. Der Winkel zur Mittelachse beträgt dabei 30°. Der äußere Durchmesser der Spitze liegt bei 5 mm. Zentral im Sondenkörper 1 verläuft eine Bohrung 2 mit einem Durchmesser von 2,2 mm. In diese Bohrung ist ein ummanteltes Thermoelement 3 in NiCr-Ni-Ausführung mit einer Spitze 3A eingesetzt. Der Sondenkörper 1 ist an einer Stelle 9 ringförmig mit dem Anschlußstück 5 verschweißt.

Die Spitze des Thermoelements 3A ragt in der Regel bis in die Mitte des Gasstroms, um die genaue Betriebstemperatur zu erfassen. Bei dieser bekannten Ausführungsform des Sondenkörpers gemäß Fig. 2 tritt als Folge von dessen thermischer Trägheit eine erhebliche Verzögerung der Anzeige der jeweils herrschenden Temperatur auf.

Fig. 3 zeigt eine Ausführungsform des Sondenkörpers, der erfindungsgemäß an seinem vorderen Ende mit einem Ringspalt 10 versehen ist. Dieser Ringspalt hatte bei einer speziellen Ausführungsform eine Länge von 15 mm und eine Spaltbreite von 0,2 mm. Die Bohrung 2 für das ummantelte Thermoelement 3 hatte einen Durchmesser von 1,5 mm, und der innerhalb des Ringspalts 10 liegende zylindrische Teil 1B des Sondenkörpers 1 hatte einen Durchmesser von 3,2 mm. In Abweichung von der Ausführungsform nach Fig. 2 war der innerhalb des Ringspalts liegende Teil des Sondenkörpers 1 an der Spitze gegenüber dem Ende des kegelförmigen Teils 1A mit einem zylindrischen Teil 1B um 2 mm verlängert. Das vordere Ende dieses Teils 1B wurde durch eine außen halbkugelförmige Schweißung 16 verschlossen. Zur drucksicheren Halterung des Mantelthermoelements 3 in der Bohrung 2 wurde diese Bohrung nach Einsetzen des Mantelthermoelements 3 durch Hämmern oder Walzen verdichtet, wodurch im allgemeinen eine Kaltverschweißung entsteht. Der Ringspalt 10 wurde durch einen Laserstrahl eingeschnitten.

Eine weitere und besonders günstig herstellbare Ausführungsform der erfindungsgemäßen Thermosonde ist in Fig. 4 dargestellt. Dort ist der Sondenkörper 1, der in dem dargestellten Beispiel einen Durchmesser von 9 mm aufweist, mit einem stufenförmigen Absatz 11 versehen, dessen Durchmesser 7 mm beträgt und der 20 mm lang ist. Danach ist ein weiterer stufenförmiger Absatz 12 vorgesehen, dessen Durchmesser 6 mm beträgt und der 9 mm lang ist. An diesen Absatz schließt sich ein bis zur Spitze verlaufender Absatz 13 mit einem Durchmesser von 3,2 mm an. Die Bohrung 2 hat einen Durchmesser von 1,5 mm für ein Mantelthermoelement mit diesem Durchmesser.

Auf diesen Sondenkörper 1 ist eine Kappe 14 aufgesetzt, deren Außendurchmesser gleich dem Außendurchmesser des Sondenkörpers 1, in diesem Falle also 9 mm, ist. Auf ihrer Innenseite ist die Kappe 14 mit stufenförmigen Ausnehmungen versehen, die dem Durchmesser der Stufen 11, 12, 13 des Sondenkörpers 1 entsprechen. In den Bereichen 11 und 12 liegen beide Teile genau aufeinander. Im Bereich 13 des Sondenkörpers 1 ist der Durchmesser der Ausnehmung der Kappe 14 um 0,4 mm größer als der Durchmesser des Sondenkörpers, so daß der gewünschte zylindrische Spalt 10 mit einer Spaltbreite von 0,2 mm entsteht. Der vordere Teil 13 des Sondenkörpers 1 überragt das konisch ausgebildete Ende 14A der Kappe 14 um 3 mm. Die Kappe 14 ist über eine Schweißnaht 15 auf dem Sondenkörper 1 befestigt. Der vordere Teil 14A der Kappe 14 ist konisch verjüngt und endet in einer senkrecht zur Längsachse der Sonde verlaufenden Kante 14B, die einen Außendurchmesser von 5,2 mm aufweist. Das vordere Ende des Sondenkörpers 1 ist durch eine aufgeschweißte Kappe 16 verschlossen.

Im Falle sehr hoher Strömungsgeschwindigkeiten des Mediums, dessen Temperatur gemessen werden soll, könnte es dazu kommen, daß die aus der Kappe 14 herausragende Spitze des Sondenkörpers 1 verbogen wird und zur Anlage an den vorderen Teil 14A der Kappe 14 kommt. Dies würde die Wirkung des erfindungsgemäßen Spalts 10 verringern. Um dies zu vermeiden, kann gemäß einer vorteilhaften Ausbildung der Erfindung die senkrecht zur Achse der Sonde verlaufende Kante 14B der Kappe 14 nach der Montage mit mehreren, vorzugsweise drei oder vier im wesentlichen kegelförmigen Körnungen parallel zur Längsachse der Sonde versehen werden, die so stark sind, daß deren Ränder zur Anlage an den Sondenkörper 1 im Bereich 14B führen. Dadurch tritt zwar eine geringfügig größere Wärmeleitung zwischen dem Sondenkörper 1 und der Kappe 14 auf. Dies kann im Hinblick auf die höhere Stabilität der erfindungsgemäßen Sonde bei hohen Strömungsgeschwindigkeiten des zu messenden Mediums jedoch hingenommen werden.

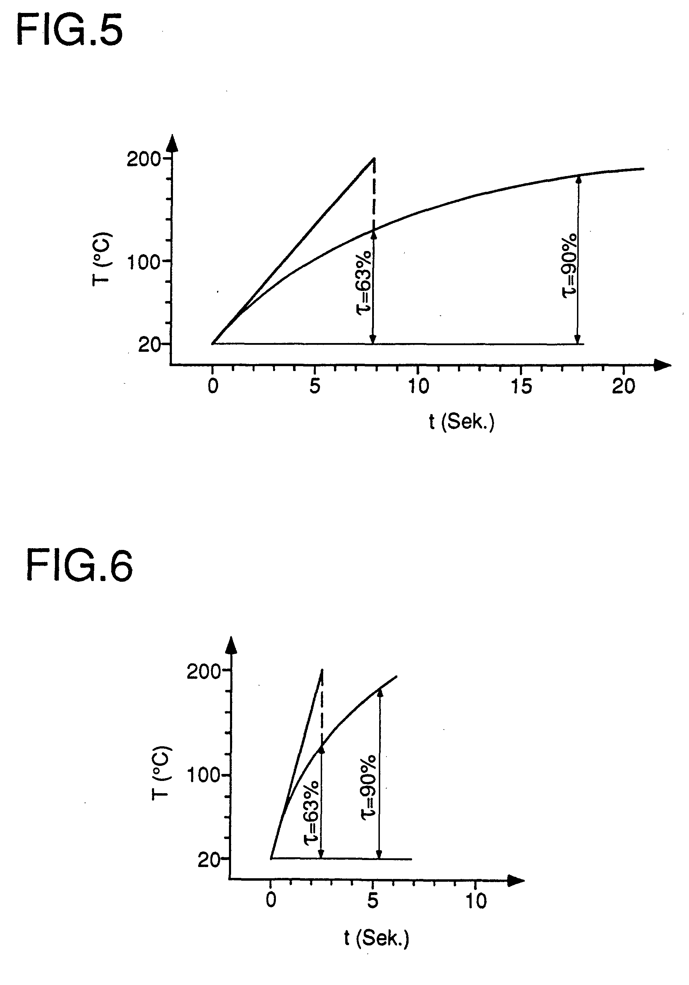

Die mit einer herkömmlichen Sonde auftretende Verzögerung der Temperaturanzeige ist in Fig. 5 dargestellt. Dabei wurde die Sonde zunächst in ein Ölbad mit einer Temperatur von 20 °C eingetaucht, um den Ausgangswert festzulegen. Danach wurde die Sonde in ein Ölbad mit 200 °C eingetaucht und die Verzögerungszeit gemessen. Aus der in Fig. 5 dargestellten Kurve läßt sich entnehmen, daß die Zeitkonstante *τ,* die 63% des Endwerts entspricht, nach 7,7 Sekunden erreicht wurde. Erst nach 17,4 Sekunden war ein Temperaturwert von 90% des Endwerts erreicht.

Das in Fig. 6 dargestellte Diagramm zeigt die mit einer erfindungsgemäß ausgebildeten Sonde erzielten Ergebnisse. Hier lag die Zeitkonstante τ bei 2,45 Sekunden. 90% des Endwerts wurden bereits nach 5,1 Sekunden erreicht. Die sogenannte Einschwingzeit, bei der 95% des Endwerts erreicht wird, liegt bei dieser Ausführungsform unter 10 Sekunden.

Aus dem Vergleich beider Diagramme ergibt sich die ganz erheblich schnellere Erfassung von Temperaturänderungen durch die erfindungsgemäße Sonde verglichen mit herkömmlichen Sonden.

## Patentansprüche

1. Sonde zur Temperaturmessung mit einem Sondenkörper, der eine Bohrung aufweist, in die ein Thermoelement oder ein Widerstandsthermometer einsetzbar ist, dessen thermisch empfindliche Spitze aus dem vorderen Teil des Sondenkörpers herausragt, **dadurch gekennzeichnet, daß** der vordere Teil des Sondenkörpers (1) mit einem Ringspalt (10) versehen ist, der sich in geringem Abstand von der Bohrung (2) entlang der Längsachse der Sonde erstreckt.

2. Sonde nach Anspruch 1, **dadurch gekennzeichnet, daß** der Ringspalt (10) eine Spaltbreite von 0,1 bis 0,5 mm, vorzugsweise 0,1 bis 0,2 mm, aufweist.

3. Sonde nach Anspruch 1 oder 2, **dadurch gekennzeichnet, daß** die Länge des Ringspalts (10) 5 bis 20 mm, vorzugsweise 10 bis 15 mm, beträgt.

4. Sonde nach einem der Ansprüche 1 bis 3, **dadurch gekennzeichnet, daß** der vordere Teil des Sondenkörpers (1) mindestens eine stufenförmige Verringerung (11) des Durchmessers aufweist und dieser Teil mit verringertem Durchmesser (11) von einer Kappe (14) überdeckt ist, deren Innendurchmesser um den doppelten Wert der Spaltbreite des Ringspalts (10) größer ist.

5. Sonde nach Anspruch 4, **dadurch gekennzeichnet, daß** der vordere Teil des Sondenkörpers (1) mindestens zwei Stufen (11, 13) mit aufeinanderfolgend verringertem Durchmesser aufweist und daß die Kappe (14) in ihrem hinteren Teil einen der ersten Stufe (11) entsprechenden Innendurchmesser aufweist, mit dem sie am Sondenkörper (1) befestigt ist.

6. Sonde nach Anspruch 4 oder 5, **dadurch gekennzeichnet, daß** die Kappe (14) mit dem Sondenkörper an einer Stelle (12) vor dem Teil mit dem am stärksten verringerten Durchmesser (13) durch Passung fixiert ist.

7. Sonde nach Anspruch 6, **dadurch gekennzeichnet, daß** die Kappe (14) an ihrem hinteren Teil mit dem Sondenkörper (1) verschweißt ist (15).

8. Sonde nach Anspruch 7, **dadurch gekennzeichnet, daß** das vordere Ende der Kappe (14) durch mehrere, vorzugsweise drei oder vier parallel zur Längsachse des Sondenkörpers (1) eingebrachte Körnungen verformt ist.

9. Sonde nach einem der vorhergehenden Ansprüche, **dadurch gekennzeichnet, daß** das vordere Ende des Sondenkörpers (1) durch eine aufgeschweißte Kappe (16) verschlossen ist.

10. Verwendung der Sonde nach einem der vorhergehenden Ansprüche zur Messung der Temperaturänderungen bei Vorgängen mit hoher Temperatur und/oder hohem Druck und/oder hoher Anströmgeschwindigkeit.

## Claims

1. A probe for temperature measurement, comprising a probe body which has a cylindrical hole into which a thermocouple or a resistance thermometer can be inserted, whose thermosensitive tip projects from the forward section of the probe body, wherein the forward section of the probe body (1) is provided with an annular gap (10) which extends along the longitudinal axis of the probe at a small distance from the cylindrical hole (2).

2. A probe as claimed in claim 1, wherein the annular gap (10) has a gap width of from 0.1 to 0.5 mm, preferably from 0.1 to 0.2 mm.

3. A probe as claimed in claim 1 or 2, wherein the length of the annular gap (10) is from 5 to 20 mm, preferably from 10 to 15 mm.

4. A probe as claimed in any one of claims 1 to 3, wherein the forward section of the probe body (1) has at least one stepped reduction (11) in the diameter, and said section having a reduced diameter (11) is covered over by a cap (14) whose internal diameter is greater by the double value of the gap width of the annular gap (10).

5. A probe as claimed in claim 4, wherein the forward section of the probe body (1) has at least two steps (11, 13) having successively reduced diameter and wherein the cap (14) in its rear section has an internal diameter which corresponds to the first step (11) and by which it is fastened to the probe body (1).

6. A probe as claimed in claim 4 or 5, wherein the cap (14) is fixed, by means of a fit, to the probe body at a location (12) before the section having the most greatly reduced diameter (13).

7. A probe as claimed in claim 6, wherein the cap (14) at its rear section is welded (15) to the probe body (1).

8. A probe as claimed in claim 7, wherein the forward end of the cap (14) is deformed by a plurality of beads, preferably three or four, introduced parallel to the longitudinal axis of the probe body (1).

9. A probe as claimed in any one of the preceding claims, wherein the forward end of the probe body (1) is closed by a welded-on cap (16).

10. The use of the probe as claimed in any one of the preceding claims for measuring the changes in temperature in the case of processes involving high temperature and/or high pressure and/or high incident flow velocity.

## Revendications

1. Sonde pour mesurer la température, possédant un corps de sonde qui présente un alésage dans lequel on peut insérer un thermocouple ou un thermomètre à résistance électrique, dont la pointe est thermosensible et dépasse de la partie antérieure du corps de sonde, **caractérisé en ce que** la partie antérieure du corps de sonde (1) présente un interstice annulaire (10) qui s'étend le long de l'axe longitudinal de la sonde et à faible distance de l'alésage (2).

2. Sonde selon la revendication 1, **caractérisée en ce que** l'interstice annulaire (10) présente une largeur d'interstice comprise entre 0,1 mm à 0,5 mm, de préférence comprise entre 0,1 mm à 0,2 mm.

3. Sonde selon la revendication 1 ou 2, **caractérisée en ce que** l'interstice annulaire (10) présente une longueur d'interstice comprise entre 5 mm à 20 mm, de préférence comprise entre 10 mm à 15 mm.

4. Sonde selon une quelconque des revendications 1 à 3, **caractérisée en ce que** la partie antérieure du corps de sonde (1) présente au moins une réduction par palier (11) du diamètre, et **en ce que** cette partie présentant un diamètre réduit (11) est couverte d'un capuchon (14) dont le diamètre intérieur est au double de la largeur de l'interstice de l'interstice annulaire (10).

5. Sonde selon la revendication 4, **caractérisée en ce que** la partie antérieure du corps de sonde (1) possède au moins deux paliers (11, 13) qui présentent, l'un après l'autre, une réduction du diamètre, et **caractérisée en ce que** la partie postérieure du capuchon (14) présente un diamètre intérieur correspondant au premier palier (11) qui sert à la fixation du capuchon au corps de sonde (1).

6. Sonde selon la revendication 4 ou 5, **caractérisée en ce que** le capuchon (14) est fixé, par ajustement, au corps de sonde à un endroit (12) antérieur à la partie qui présente le diamètre le plus réduit (13).

7. Sonde selon la revendication 6, **caractérisée en ce que** le capuchon (14) est soudé (15) par sa partie postérieure au corps de sonde (1).

8. Sonde selon la revendication 7, **caractérisée en ce que** l'extrémité antérieure du capuchon (14) est formée avec plusieurs bossages, de préférence trois ou quatre, situés parallèlement à l'axe longitudinal du corps de sonde (1).

9. Sonde selon l'une quelconque des revendications précédentes, **caractérisée en ce que** l'extrémité antérieure du corps de sonde (1) est fermée par un capuchon soudé (16).

10. Mise en oeuvre de la sonde selon l'une quelconque des revendications précédentes pour mesurer la variation de température pendant les procédés **caractérisés par** une température élevée et/ou une pression élevée et/ou une vitesse de soufflage élevée.
